# EUROPÄISCHE PATENTANMELDUNG

(11) **EP 1 496 595 A2**
(43) Veröffentlichungstag der Anmeldung: **12.01.2005**
(21) Anmeldenummer: 04103184.0
(22) Anmeldetag: 06.07.2004
(51) Int. Cl.: H02K 3/14, G01B 11/00

(54) **Integrierte Anordnung optischer Fasern in einem Leiter**

(30) Priorität: 11.07.2003 DE 10331486
(71) Anmelder: Alstom Technology Ltd, 5400 Baden (CH)
(72) Erfinder: Drubel, Oliver, 5415, Nussbaumen (CH); Izquierdo, Alberto, 5432, Neuenhof (CH); Scherf, Gunter, 5242, Birr (CH)

(57) **Zusammenfassung**

Die Erfindung betrifft einen elektrischen Leiter und insbesondere einen Leiterstab einer elektrischen Maschine, insbesondere eines Generators oder Transformators, in dem eine optische Meßeinrichtung integriert angeordnet werden kann. Ferner betrifft die Erfindung eine Meßeinheit umfassend einen elektrischen Leiter und eine in dem Leiter angeordnete optische Meßeinrichtung sowie ein Herstellungsverfahren zur Herstellung eines solchen elektrischen Leiters.

Der erfindungsgemäße elektrische Leiter (10), der einen Leiterquerschnitt sowie eine Erstreckung in Leiterlängsrichtung aufweist, umfaßt in Leiterlängsrichtung zumindest längs eines Abschnittes des Leiters eine Aussparung (11, 12, 13) zur integrierten Anordnung eines Signalleiters, insbesondere eines optischen Lichtwellenleiters.

## Beschreibung

### Technisches Gebiet

Die Erfindung betrifft einen elektrischen Leiter und insbesondere einen Leiterstab oder einen Teilleiter eines Leiterstabes, der insbesondere in einem Generator oder Transformator verwendet werden kann, wobei in dem elektrischen Leiter, dem Leiterstab oder dem Teilleiter eines Leiterstabes eine optische Meßeinrichtung integriert angeordnet werden kann. Ferner betrifft die Erfindung eine Meßeinheit umfassend einen elektrischen Leiter und eine in dem Leiter angeordnete optische Meßeinrichtung sowie ein Herstellungsverfahren zur Herstellung eines solchen elektrischen Leiters.

### Stand der Technik

In elektrischen Generatoren, Transformatoren sowie auch in anderen elektrischen Maschinen werden zur Leitung des elektrischen Stroms elektrische Leiter, sogenannte Leiterstäbe (kurz: Stäbe), in Einzelanordnung oder als Stabpakete eingesetzt. Diese Leiter erwärmen sich als Folge des Stromdurchflusses teilweise erheblich. Übersteigt die Temperatur hierbei einen gewissen Maximalwert, so kann es zu einer Schädigung des elektrischen Leiters selbst oder auch anderer, an den elektrischen Leiter angrenzender Bauteile kommen. Insofern ist es wünschenswert, eine stete Überwachung der Temperatur durchzuführen. In einigen, aus dem Stand der Technik bekannten elektrischen Maschinen, insbesondere in solchen, die einen hohen Investitionsaufwand darstellen und die somit für eine lange Lebensdauer konzipiert sind, ist eine solche Temperaturüberwachung bereits realisiert. Hierzu wird an einer zu messenden Stelle ein geeigneter Sensor platziert. Der Sensor generiert dann ein Meßsignal, das über eine Signalleitung ausgehend von dem Sensor einer Weiterverarbeitung zuzuführen ist. In elektrischen Maschinen ist aufgrund der oftmals sehr hohen Stromflüsse und der sich als Folge dieser hohen Stromflüsse ausbildenden, starken elektromagnetischen Felder eine Leitung eines elektrischen Signals nicht sinnvoll möglich. Zudem lassen sich metallische Sensoren nicht an Massestellen einsetzen, die auf einem hohen elektrischen Potential liegen. Um Signalverfälschungen infolge von Signaleinstreuungen zu vermeiden, werden in elektrischen Maschinen daher heutzutage zumeist Sensoren eingesetzt, die optische Signale erzeugen, die dann über optische Signalleiter, insbesondere Lichtwellenleiter, einer Weiterverarbeitung zugeführt werden. Zudem werden die elektrischen Generatoren und Transformatoren heutzutage üblicherweise in einer sehr kompakten Bauweise ausgeführt, so daß insbesondere die Anordnung des Signalleiters konstruktiv problematisch ist.

Aus der deutschen Offenlegungsschrift DE 101 39 760 A1 ist hierzu beispielsweise eine Wickelanordnung bekannt, bei der ein als Signalleitung verwendeter Lichtwellenleiter im Durchführungsbereich durch einen Wickelkörper in diesen Wickelkörper mit eingewickelt ist. Zwar ist der Lichtwellenleiter so in den Wickelkörper integriert, daß die Außenabmessungen des Wickelkörpers hierdurch nicht verändert werden. Jedoch ist die Herstellung der Wicklung mit eingewickeltem Lichtwellenleiter fertigungstechnisch aufwendig. Insbesondere kann auch ein defekter Lichtwellenleiter nicht einfach wieder entfernt und durch einen neuen Lichtwellenleiter ersetzt werden, ohne den Wickelkörper hierzu vollständig zu entwickeln.

Auch aus der deutschen Patentschrift DE 199 62 668 C1 ist eine Anordnung einer optischen Meßeinrichtung an einem Leiter bekannt. Der Leiter kann beispielsweise Bestandteil einer Stator- oder einer Rotor-Wicklung eines Generators sein. Der Leiter ist hierzu in eine Nut eines Stator-Blechpakets oder eines Rotor-Blechpakets gepresst, wobei die Nut durch zwei Nutseitenwände begrenzt wird. Die Meßeinrichtung, die einen optischen Sensor sowie einen mit dem Sensor verbundenen Lichtwellenleiter umfaßt, ist an einer den beiden Nutseitenwänden abgewandten Längsseite der Nut angeordnet. Wird somit gemäß dieser Lehre ein Sensor an einem Leiter angeordnet, so vergrößert sich das Bauvolumen der Gesamtanordnung mindestens entsprechend den Abmessungen des Lichtwellenleiters und des Sensors. Ferner kann eine zu messende Größe, beispielsweise eine Temperatur, nur an der Längsseite, d.h. nur oben oder unten an dem Leiter bestimmt werden.
Bei allen aus dem Stand der Technik bekannten Anordnungen werden die Sensoren jeweils auf der Außenseite des elektrischen Leiters positioniert. Somit sind hiermit auch nur die auf den Außenseiten anliegenden Temperaturen meßbar.

### Darstellung der Erfindung

Der Erfindung liegt somit die Aufgabe zugrunde, einen elektrischen Leiter, insbesondere einen zur Verwendung in einem Generator oder Transformator geeigneten Stab, zur Verfügung zu stellen, in dem mit vergleichsweise geringem Fertigungsaufwand eine optische Meßeinrichtung integriert angeordnet werden kann. Insbesondere soll eine Anordnung der optischen Meßeinrichtung frei wählbar an verschiedenen Positionen des Leiters möglich sein, so daß die zu messenden Meßgrößen dementsprechend an diesen verschiedenen Positionen des Leiters ermittelbar sind. Auch sollen insbesondere die Außenabmessungen des elektrischen Leiters durch die Anordnung der optischen Meßeinrichtung im Verhältnis zu einem Leiter ohne optischer Meßeinrichtung nicht verändert werden, so daß es möglich ist, einen Leiter ohne optische Meßeinrichtung durch einen Leiter mit optischer Meßeinrichtung auszutauschen.

Diese Aufgaben werden erfindungsgemäß durch einen elektrischen Leiter gemäß Anspruch 1, eine Meßeinheit gemäß Anspruch 10 sowie ein Herstellungsverfahren gemäß Anspruch 15 gelöst. Weitere vorteilhafte Ausgestaltungen der Erfindung finden sich in den Unteransprüchen.

Die Erfindung sieht vor, in einem elektrischen Leiter, der einen Leiterquerschnitt sowie eine Erstreckung in Leiterlängsrichtung aufweist, in Leiterlängsrichtung zumindest längs eines Abschnittes des Leiters eine Aussparung zur integrierten Anordnung eines Signalleiters, insbesondere eines optischen Lichtwellenleiters, anzubringen. Bevorzugt handelt es sich bei dem Leiter um einen Stab zur Verwendung in einer elektrischen Maschine, insbesondere in einem Generator oder Transformator, oder auch um einen Teilleiter eines Stabes, insbesondere eines Roebel-Stabes, zur Verwendung in einer elektrischen Maschine, insbesondere in einem Generator oder Transformator.

Zweckmäßig wird in der Aussparung zusätzlich zu dem Signalleiter auch ein Sensor angeordnet, der eine zu messende Größe, beispielsweise eine Temperatur, erfaßt, in ein vorzugsweise optisches Signal umwandelt und an den Signalleiter weiterleitet. Auch kann der Signalleiter so ausgebildet sein, daß er selbst Sensorfunktionen wahrnimmt oder der Sensor Bestandteil des Signalleiters ist.

Durch die integrierte Anordnung des Signalleiters in einer Aussparung des Leiters bleibt der erfindungsgemäß ausgeführte Leiter in seinen Außenabmessungen unverändert. Somit läßt sich eine sehr kompakte Anordnung des erfindungsgemäß ausgeführten Stabes in einer elektrischen Maschine oder auch mehrerer, zu einem Stab verbundener Teilleiter erzielen. Insbesondere kann in einer Anwendung ein erfindungsgemäß ausgeführter Leiter an der Stelle eines Leiters, der nicht mit einem integriert angeordneten Lichtwellenleiter ausgestattet ist, vorgesehen werden, ohne daß hierzu weitere Anpassungsmaßnahmen erforderlich wären. Die in dem Leiter vorzusehenden Aussparungen können auf unterschiedliche Weisen fertigungstechnisch einfach hergestellt werden.

Vorzugsweise erstreckt sich die Aussparung von einer äußeren Seite des Leiters bis hin zur Mitte des Leiters, so daß ein Lichtwellenleiter von dieser äußeren Seite des Leiters bis zur Mitte hin zugeführt werden kann. Insbesondere bei symmetrisch aufgebauten Leitern, bei denen die Symmetrieachse durch die Mitte des Leiters verläuft, ist es ausreichend, eine sich bis zur Mitte des Leiters erstreckende Aussparung vorzusehen.

Die Aussparung kann aber auch durchgängig, d.h. von einer äußeren Seite zu der gegenüberliegenden äußeren Seite, vorgesehen sein.

In einer bevorzugten Ausführung der Erfindung ist die Aussparung als schlitzförmige Nut ausgeführt. Eine solche Nut ist fertigungstechnisch beispielsweise mittels eines Fräsvorgangs einfach herstellbar. Die Nut sollte hierzu mit einer nur geringfügig größeren Breite ausgeführt sein als die Breite des in die Nut einzulegenden optischen Lichtwellenleiters. Die Tiefe der Nut kann weitgehend frei gewählt werden. In vielen Anwendungsfällen und insbesondere in denjenigen Bereichen des Leiters, durch die der Lichtwellenleiter lediglich durchgeführt wird, ist es ausreichend, die Nut mit einer Tiefe auszuführen, die geringfügig größer ist als die Abmessung des einzulegenden Lichtwellenleiters. Wird jedoch auch der Sensor in der Nut angeordnet oder erfüllt der Lichtwellenleiter zumindest in einem Abschnitt auch die Funktion eines Sensors, so kann es zweckmäßig sein, die Nut zumindest im Bereich des anzuordnenden Sensors oder in dem Bereich, in dem der Lichtwelleleiter auch als Sensor fungiert, mit einer größeren Nuttiefe auszuführen. Somit ist eine Erfassung eines Meßwertes, beispielsweise die Messung der Temperatur des Leiters, nicht nur an der Oberfläche des Leiters sondern auch im Leiter möglich.

Alternativ oder ergänzend kann die Aussparung auch in Form eines Loches, vorzugsweise eines Bohrloches, in dem Leiter ausgebildet sein. Ein Bohrloch ist einfach herzustellen und kann als Blindloch oder als Durchgangsloch ausgeführt sein.

Alternativ kann die Aussparung aber auch in Form einer Abtrennung des elektrischen Leiters ausgebildet sein. Hierzu wird beispielsweise an einer Seitenfläche ein vorzugsweise rechteckförmiges Stück des elektrischen Leiters abgetrennt. Die Abtrennung sollte eine Breite aufweisen, die nur geringfügig größer ist als die Breite des in die Nut einzulegenden optischen Lichtwellenleiters.

Der Leiter kann als einfache Leiterbahn ausgeführt sein, die als Einzelbauteil in einer elektrischen Maschine angeordnet werden kann.

In einer bevorzugten Ausführungsform der Erfindung ist der elektrische Leiter als Stab, bevorzugt als gewickelter Stab und besonders bevorzugt als Roebel-Stab ausgeführt. Ein gewickelter Stab oder ein Roebel-Stab umfaßt eine Mehrzahl von Teilleitern. Der grundsätzliche Aufbau solcher Stäbe ist beispielsweise aus der DE 101 39 760 A1 oder auch der DE 199 62 668 C1 bekannt. Üblicherweise verläuft die Aussparung hier längs eines Stabes bzw. längs des Teilleiters oder auch integriert in dem Teilleiter.

Bei einem als Roebel-Stab ausgeführten Leiter sind die Teilleiter transponiert angeordnet, d.h. jeder Teilleiter des Roebel-Stabs nimmt jeden Teilplatz des Querschnitts des Roebel-Stabs mindestens einmal ein. Bei einem als Roebel-Stab ausgeführten Leiter ist die Aussparung zweckmäßig so angeordnet, daß diese die einzelnen Teilleiter kreuzt. Dies ist beispielsweise dann der Fall, wenn die Aussparung geradlinig verläuft, während die Teilleiter des Roebel-Stabs transponiert angeordnet sind.

Umfaßt der Stab eine Mehrzahl von Teilleitern, so kann die Aussparung alternativ zu den oben beschriebenen Ausführungsformen auch vorzugsweise als eine Teilleiterlücke ausgeführt sein. Die Teilleiterlücke wird zweckmäßig durch ein Entfernen eines Teilleiters aus dem Stab hergestellt. Anstelle des Teilleiters kann der optische Lichtwellenleiter in den Stab integriert werden.

Besonders vorteilhaft umfaßt der erfindungsgemäße Leiter eine Mehrzahl von Aussparungen, die an verschiedenen Positionen des Leiters angeordnet sind. Besonders vorteilhaft sind die Aussparungen so anzuordnen, daß diese an verschiedenen radialen Positionen eines Rotors oder Stators zu liegen kommen, sobald der Leiter in einem Rotor oder Stator beispielsweise eines Generators angeordnet ist.

In einem weiteren Aspekt stellt die Erfindung eine Meßeinheit zur Verfügung, die einen wie oben beschriebenen elektrischen Leiter sowie einen optischen Lichtwellenleiter, der in der Aussparung des elektrischen Leiters, beispielsweise des Stabes, angeordnet ist, umfaßt. Der optische Lichtwellenleiter dient hierbei zur Leitung eines Lichtsignals, das beispielsweise von einem an einem Ende des Lichtwellenleiters angeordneten Sensor generiert wird.
Zweckmäßig umfaßt die Meßeinheit ferner einen Sensor, insbesondere einen Temperatursensor oder einen Dehnungsmeßsensor, der so angeordnet ist, daß von dem Sensor generierte Signale in den Lichtwellenleiter eingeleitet werden. Mit der Meßeinheit ist es somit möglich, Temperaturen oder Spannungsbelastungen oder auch andere Meßgrößen innerhalb des Leiters zu messen und das Meßsignal zur weiteren Signalverarbeitung über den Lichtwellenleiter nach außen zu leiten. Somit ist eine kontinuierliche Temperatur- oder Belastungsüberwachung des Leiters möglich. Übersteigt der Meßwert einen zulässigen Grenzwert, so daß eine Schädigung des Leiters oder anderer, benachbarter Bauteile zu befürchten ist, so kann gezielt eine Gegenmaßnahme, beispielsweise eine Verminderung der Stromdurchführung, eingeleitet werden. Auch kann der Sensor in den Lichtwellenleiter integriert sein oder es können auch mehrere Sensoren an verschiedenen Positionen längs des Lichtwellenleiters in den Lichtwellenleiter integriert sein.
Zweckmäßig wird ein verbleibender Spaltraum, der nach der Anordnung des Lichtwellenleiters und des Sensors in der Aussparung zurückbleibt, mit einem Füllmaterial aufgefüllt und verklebt.

Die erfindungsgemäße Ausführung der Meßeinheit ermöglicht hierbei vorteilhaft, daß Meßwerte an einer oder mehreren Positionen des Leiters, beispielsweise des Stabes, mittels eines oder mehrerer Sensoren erfasst und die Sensorsignale mittels eines oder mehrerer Lichtwellenleiter zur Weiterverarbeitung aus dem Leiter geleitet werden können. Ferner ist zur Integration der Meßeinheit kein zusätzlicher Platz erforderlich, so daß ein herkömmlicher Leiter durch die erfindungsgemäße Meßeinheit ersetzt werden kann, ohne daß Änderungen an der Aufnahme- und/oder Halterungsvorrichtung des Leiters erforderlich wären.

Vorteilhaft ist der optische Lichtwellenleiter so angeordnet, daß er gleichzeitig eine Isolierung von Teilleitern gegeneinander und/oder eine Isolierung des Stabs erbringt. Hierzu ist der Lichtwellenleiter zweckmäßig so verlegt, daß ein oder mehrere Teilleiter oder der gesamte Stab von dem optischen Lichtwellenleiter umrahmt wird. Eine Isolierung der Teilleiter gegeneinander verhindert oder vermindert zumindest die Gefahr eines Spannungsdurchschlags von einem Teilleiter auf den anderen. Entsprechend gilt dies auch bei Umrahmung des gesamten Stabs.

Vorzugsweise ist der Signalleiter, beispielsweise der Lichtwellenleiter, vollständig in ein Röhrchen integriert. Das Röhrchen kann hierzu aus Stahl ('stainless-steel') gefertigt sein. Somit ist sichergestellt, daß der Signalleiter keinen unmittelbaren Kontakt zum Isolierungsharz hat, wodurch verhindert wird, daß in dem Signalleiter mechanische Spannungen, die zu einer Verfälschung des Signals führen würden, durch die unmittelbare Kontaktierung mit dem Harz hervorgerufen werden.

In einem weiteren Aspekt stellt die Erfindung ein Herstellungsverfahren zur Herstellung eines elektrischen Leiters, insbesondere eines wie oben beschriebenen Leiters, zur Verfügung, das die folgenden Verfahrensschritte umfaßt:
- Wickeln einer Mehrzahl von Teilleitern zu einem Stab unter Hinzufügen von Klebemittel;
- Einbringen einer in Längsrichtung des Stabs verlaufenden Aussparung in den Stab, insbesondere durch Fräsen.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: in schematischer Darstellung einen Querschnitt durch einen erfindungsgemäß ausgeführten elektrischen Leiter;
- Figur 2: in schematischer Darstellung einen Querschnitt durch einen weiteren erfindungsgemäß ausgeführten elektrischen Leiter;
- Figur 3: einen erfindungsgemäß ausgeführten Stab umfassend eine Mehrzahl von parallel zueinander angeordneten Teilleitern;
- Figur 4: einen Schnitt durch einen erfindungsgemäß ausgeführten Roebel-Stab.

In den Figuren sind nur die für das Verständnis der Erfindung wesentlichen Elemente und Bauteile dargestellt. Gleiche oder gleichwirkende Bauteile sind weitgehend mit denselben Bezugszeichen versehen.

### Wege zur Ausführung der Erfindung

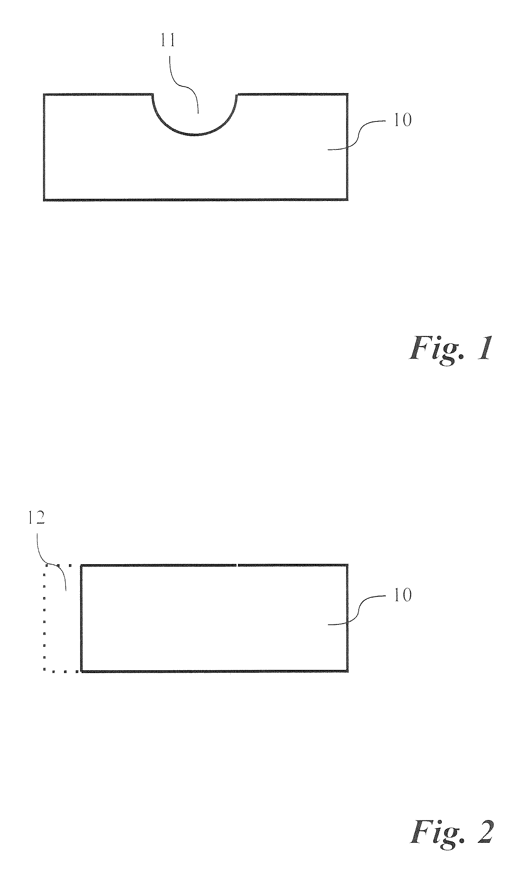

In Figur 1 ist in schematischer Darstellung ein Querschnitt durch einen erfindungsgemäß ausgeführten elektrischen Leiter 10 dargestellt. Der hier dargestellte Leiter ist zur Verwendung in einer elektrischen Maschine, insbesondere in einem Generator oder Transformator, geeignet. Der Leiter 10 weist einen im wesentlichen rechteckförmigen Querschnitt auf. Die Erstreckung des Leiters senkrecht zur Blattebene bildet die Längsrichtung des Leiters. Um in dem Leiter einen optischen Lichtwellenleiter integriert anordnen zu können, weist der in Figur 1 dargestellte Leiter 10 auf seiner Oberseite eine schlitzförmige Nut 11 auf. Der Nutboden der Nut 11 ist hier halbrund ausgeführt. In der Darstellung hier nicht zu erkennen ist, daß sich die schlitzförmige Nut 11 in Längsrichtung der Nut 11 von einer Querseite des Leiters bis mindestens in die Mitte des Leiters erstreckt.

In die schlitzförmige Nut 11 kann ein optischer Lichtwellenleiter oder auch eine andere Signalleitung eingelegt werden. Vorzugsweise ist der Sensor, beispielsweise ein Temperatursensor, an dem in dem Leiter endenden Ende des Lichtwellenleiters so angeordnet, daß Signale des Sensors in den Lichtwellenleiter eingeleitet und in diesem weitergeleitet werden.

Der Lichtwellenleiter wird bis zum Nutboden in die Nut 11 eingeschoben und der verbleibende Spaltraum mit einem Füllmaterial bündig zur Oberseite der Leiterbahn hin aufgefüllt. Das Füllmaterial härtet hierbei nach einer gewissen Zeitspanne aus.

Ein wie in Figur 1 dargestellter Leiter 10 kann alleine oder in einer Gruppierung mit weiteren Leitern oder Teilleitern als Generator- oder Transformatorstab eingesetzt werden. Durch die erfindungsgemäße Anordnung der Aussparung kann in den Leiter sowohl ein Sensor als auch eine Signalleitung integriert angeordnet werden, um so in dem Leiter eine Zustandsgröße zu messen sowie die gemessene Zustandsgröße als Signal zu einer außerhalb angeordneten Verarbeitungseinheit zu leiten.

Im Vergleich zu aus dem Stand der Technik bekannten Lösungen kommt es bei Anordnung eines optischen Lichtwellenleiters aufgrund der integrierten Anordnung zu keiner Veränderung der Außenabmessungen des in Figur 1 dargestellten Leiters. Demgemäß ist die Aufnahmeaussparung eines Rotorleiterpakets oder in eines Statorleiterpakets eines Generators oder Transformators konstruktiv nicht zu verändern, um anstelle eines herkömmlichen Leiters einen erfindungsgemäß ausgeführten Leiter in dem Rotorleiterpaket oder dem Statorleiterpaket anzuordnen. Auch werden die konstruktiven Abmessungen des Rotors oder Stators des Generators oder Transformators bei Einbau eines wie in Figur 1 dargestellten Leiters oder Teilleiters nicht verändert.

Die Nut kann mit einer nur geringen Tiefe oder auch mit einer größeren Tiefe ausgeführt sein. Auch kann die Nuttiefe abschnittsweise variieren. Demgemäß kann auch der Sensor oder der Lichtwellenleiter in verschiedenen Tiefen des Leiters angeordnet werden. Somit können Meßwerte nicht nur an den Außenseiten des Leiters meßtechnisch ermittelt und kontrolliert werden, sondern auch im Innern des Leiters. Ebenso ist es auch möglich, mehrere Nuten nebeneinander anzuordnen, so daß Meßwerte an verschiedenen benachbarten Positionen ermittelt werden können.

Ein weiterer Vorteil der Ausführung der Erfindung gemäß Figur 1 besteht darin, daß die Aussparung fertigungstechnisch einfach herstellbar ist. Eine wie in Figur 1 dargestellte Nut 11 kann beispielsweise mittels eines Fräsvorgangs hergestellt werden. Eine lochförmige Aussparung, die alternativ zu einer Nut vorgesehen werden kann, kann aber auch mittels Bohren hergestellt werden. Dies gilt auch für einen gewickelten Stab, bei dem die Aussparung entweder ausschließlich in einem Teilleiter verläuft oder, insbesondere im Falle eines Roebel-Stabs, auch mehrere Teilleiter kreuzend angeordnet ist.

In Figur 2 ist wiederum in schematischer Darstellung ein Querschnitt durch einen weiteren erfindungsgemäß ausgeführten elektrischen Leiter 10 dargestellt. Die hier dargestellte Aussparung ist als rechteckförmige Abtrennung 12 ausgeführt und in Figur 2 durch Strichelung wiedergegeben. Nach einem Entfernen der Abtrennung 12 kann an der Stelle der Abtrennung ein Signalleiter, beispielsweise ein optischer Lichtwellenleiter integriert angeordnet werden und mit Hilfe von Klebe- und Füllmaterial fixiert werden. Das Füllmaterial dient hier auch dazu, wieder die ursprüngliche Außenkontur zu modellieren. Da eine Abtrennung zumeist über die gesamte Höhe des Leiters erfolgt, eignet sich eine solche Abtrennung jedoch im wesentlichen nur, wenn die Meßgröße im Randbereich des Leiters ermittelt werden soll.

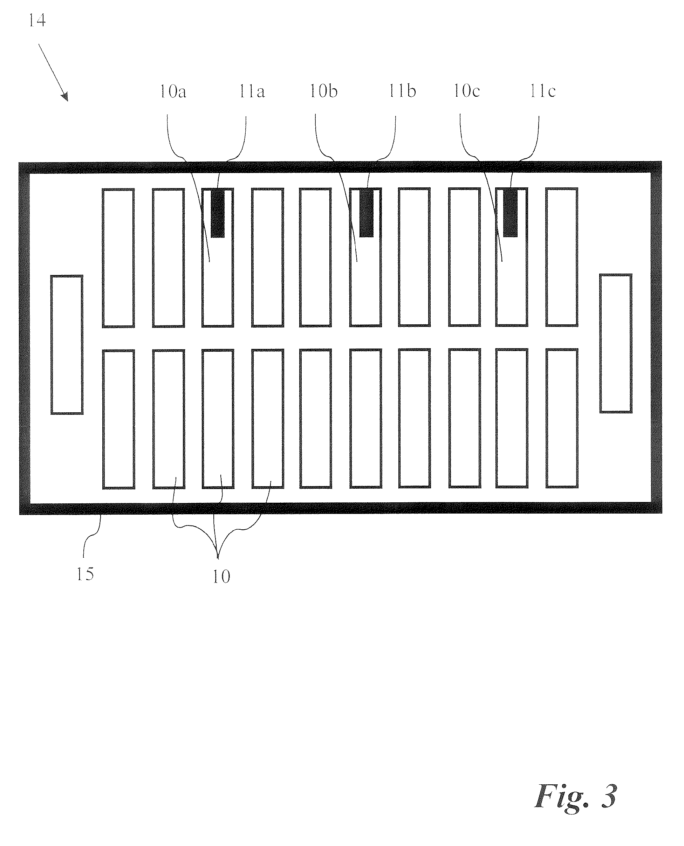

Figur 3 zeigt einen erfindungsgemäß ausgeführten Stab 14, der eine Mehrzahl von parallel zueinander angeordneten Teilleitern 10 umfaßt. Die Teilleiter 10 sind hier im wesentlichen in zwei Reihen zueinander angeordnet. Drei der in der oberen Reihe befindlichen Teilleiter 10a, 10b, 10c weisen Aussparungen 11a, 11b, 11c auf, die als Nuten ausgeführt sind und in die jeweils ein Sensor, hier ein Temperatursensor, sowie ein optischer Lichtwellenleiter zur Leitung des Sensorsignals eingesetzt sind. Der verbleibende Spaltraum ist jeweils mit Füllmaterial aufgefüllt.

Der in Figur 3 dargestellte Stab 14 weist ferner eine den Stab umrahmende Isolierung 15 auf, um einen Spannungsdurchschlag von einem Stab auf einen anderen, benachbart angeordneten Stab zu verhindern.

Ein solcher Stab kann beispielsweise in einem Generator oder einem Transformator eingebaut werden.

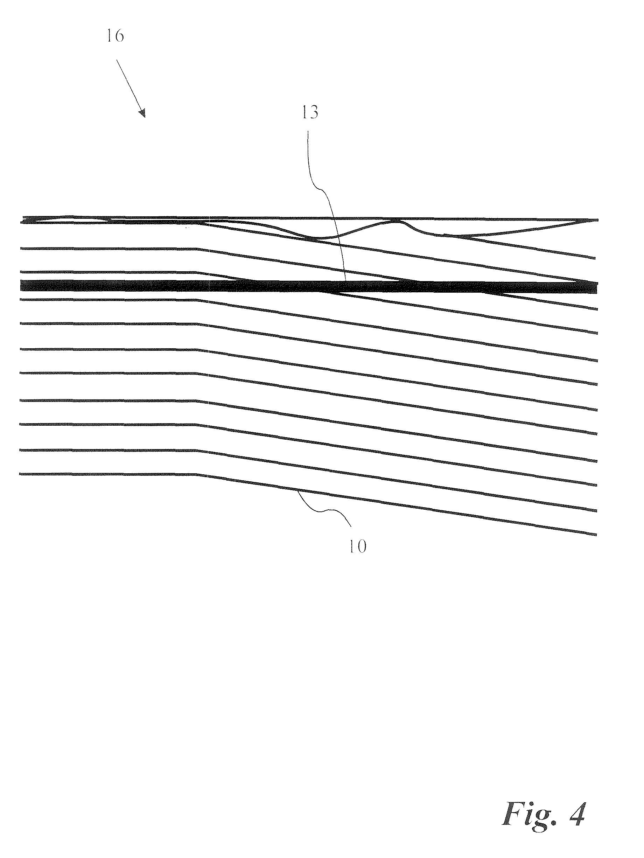

Figur 4 zeigt einen Schnitt durch einen erfindungsgemäß ausgeführten Roebel-Stab 16. Der Robel-Stab 16 umfaßt eine Vielzahl von Teilleitern 10, die in Längsrichtung transponiert sind, d.h. gegeneinander vertwistet sind. Diese Roebelung ist einerseits an den quer verlaufenden Teilleitern am oberen Rand der Figur 4 sowie auch an dem geknickten Verlauf der übrigen Teilleiter zu erkennen. In diesen Roebel-Stab ist eine lochförmige Bohrung 13 eingebracht, in die wie dargestellt ein optischer Lichtwellenleiter eingesetzt ist. Die Bohrung 13 sowie der eingesetzte optische Lichtwellenleiter kreuzen hierbei die Teilleiter 10.

### Bezugszeichenliste

- 10: Leiter bzw. Teilleiter
- 11: Nut
- 12: Abtrennung
- 13: Bohrung
- 14: Stab
- 15: Isolierung
- 16: Roebel-Stab

## Patentansprüche

1. Elektrischer Leiter zur Verwendung in einer elektrischen Maschine, insbesondere zum Einbau in einen elektrischen Generator oder Transformator, wobei der Leiter einen Leiterquerschnitt sowie eine Erstreckung in Leiterlängsrichtung aufweist und der elektrische Leiter in Leiterlängsrichtung zumindest längs eines Abschnittes des Leiters eine Aussparung zur integrierten Anordnung eines Signalleiters, insbesondere eines optischen Lichtwellenleiters, aufweist.

2. Elektrischer Leiter nach Anspruch 1, wobei die Aussparung eine schlitzförmige Nut (11) ist.

3. Elektrischer Leiter nach Anspruch 1, wobei die Aussparung eine Abtrennung (12) des elektrischen Leiters ist.

4. Elektrischer Leiter nach einem der vorhergehenden Ansprüche, wobei der elektrische Leiter ein Stab (10) ist.

5. Elektrischer Leiter nach einem der vorhergehenden Ansprüche, wobei der elektrische Leiter ein gewickelter Stab (14), insbesondere ein Roebel-Stab (16), ist und wobei der Stab (14, 16) eine Mehrzahl von Teilleitern (10) umfaßt.

6. Elektrischer Leiter nach Anspruch 5, wobei die Aussparung entlang eines Teilleiters verläuft.

7. Elektrischer Leiter nach Anspruch 5, wobei die Aussparung quer über mehrere Teilleiter verläuft.

8. Elektrischer Leiter nach Anspruch 5, wobei die Aussparung eine Leiterkabellücke ist, die durch Entfernen eines Teilleiters aus dem Stab (14, 16) hergestellt wurde.

9. Elektrischer Leiter nach einem der vorhergehenden Ansprüche, wobei der Leiter eine Mehrzahl von Aussparungen umfaßt, die an unterschiedlichen Positionen des Leiters angeordnet sind.

10. Meßeinheit umfassend einen elektrischen Leiter gemäß einem der vorhergehenden Ansprüche und einen Signalleiter, vorzugsweise einen optischen Lichtwellenleiter, der in der Aussparung des elektrischen Leiters angeordnet ist.

11. Meßeinheit nach Anspruch 10, wobei die Meßeinheit ferner zumindest einen Temperatursensor oder zumindest einen Dehnungsmeßsensor umfaßt, der so angeordnet ist, daß von dem Sensor generierte Signale in den Signalleiter eingeleitet werden.

12. Meßeinheit nach einem der Ansprüche 10 oder 11, wobei der Signalleiter so ausgebildet ist, daß er selbst Sensorfunktionen wahrnimmt, und/oder der Sensor Bestandteil des Signalleiters ist.

13. Meßeinheit nach einem der Ansprüche 10 bis 12, wobei der optische Lichtwellenleiter so angeordnet ist, daß er eine Isolierung von Leiterbahnen gegeneinander und/oder eine Isolierung des Leiterstabs erbringt.

14. Meßeinheit nach einem der Ansprüche 10 bis 13, wobei der Lichtwellenleiter in ein Röhrchen integriert ist.

15. Herstellungsverfahren zur Herstellung eines elektrischen Leiters insbesondere gemäß einem der Ansprüche 1 bis 14 umfassend die Verfahrensschritte:
• Wickeln einer Mehrzahl von Leiterbahnen zu einem Leiterstab unter Hinzufügen von Klebemittel;
• Einbringen einer in Längsrichtung des Leiterstabs verlaufenden Aussparung in den Leiterstab, insbesondere durch Fräsen.
